# FASCICULE DE BREVET EUROPEEN

(11) **EP 1 701 607 B1**
(45) Date de publication et mention de la délivrance du brevet: **18.03.2009**
(21) Numéro de dépôt: 04701027.7
(22) Date de dépôt: 09.01.2004
(51) Int. Cl.: A01D 34/416

(54) **TETE DE COUPE POUR DEBROUSSAILLEUSE, COUPE-BORDURES OU ANALOGUE POURVUE DE MOYENS DE BLOCAGE PERFECTIONNES D'UN FIL DE COUPE**
SCHNEIDKOPFEINRICHTUNG FÜR BUSCHMÄHERFAHRZEUG, RASENKANTENSCHNEIDER ODER ANALOG , MIT PERFEKTIONIERTEN VERRIEGELUNGSMITTELN EINES MÄHFADENS
CUTTING HEAD FOR BUSH CUTTER, HEDGE CUTTER OR THE LIKE PROVIDED WITH IMPROVED MEANS FOR LOCKING A CUTTING WIRE

(43) Date de publication de la demande: 20.09.2006
(73) Titulaire: SPEED FRANCE, 69400 Arnas (FR)
(72) Inventeur: LEGRAND, Emmanuel, 01240 Saint Germain sur Renon (FR)
(74) Mandataire: Tetaz, Franck Claude Edouard
(86) Numéro de dépôt international: PCT/FR2004/000031
(87) Numéro de publication internationale: WO 2005/074668

(56) Documents cités:
- US-A- 6 058 574
- US-A1- 2003 033 718
- US-A1- 2003 200 662

## Description

La présente invention concerne d'une façon générale le domaine des appareils de coupe de végétaux, tels que débrousailleuses, coupe-bordures, etc.

Dans ce type d'appareil, un ou plusieurs fils de coupe, soit dévidés à partir d'une réserve au fur et à mesure de l'usure, soit sous forme de brins ou tronçons individuels remplacés lors de l'usure, doivent être fermement bloqués par rapport à la tête de coupe rotative sur laquelle ils sont montés.

On connaît à cet égard un certain nombre de techniques pour bloquer le fil.

L'une de ces techniques recourt à un élément mobile de blocage du type came, qui est sollicité par un ressort et/ou par la force centrifuge engendrée lors de la rotation de la tête pour exercer une pression sur le fil, une contre-paroi d'appui étant prévue à l'opposé de l'élément de blocage pour emprisonner localement le fil entre l'élément et la paroi d'appui. Les documents US-A-4 301 642, US-A-4 335 510 et EP-A-0 824 854 donnent des exemples de ces techniques.

Pour améliorer l'effet de blocage, il est également connu de prévoir sur l'élément de blocage une série de dents capables d'un meilleur ancrage avec la matière (en général un polyamide) du fil.

De tels agencements connus de blocage du fil présentent toutefois certains inconvénients. Le premier d'entre eux est qu'ils nécessitent des aménagements précis et parfois compliqués dans la tête de coupe (axe de pivotement, butées ou cales de ressort, etc.) qui de ce fait s'avère plus coûteuse à fabriquer que ce soit par moulage, par usinage, etc. Le second est que la came dentée est une pièce métallique qui doit être usinée avec précision et réalisée en un alliage mécanique de solidité et de rigidité suffisantes, et qui est donc également coûteuse.

En outre, le montage de l'ensemble est fastidieux, ce qui grève encore le coût de revient.

Enfin les dispositifs de blocage à came sont en général mal adaptés au blocage de fils de tailles et/ou de formes différentes.

US 2003/0200662 décrit une tête de coupe conforme au préambule de la revendication 1.

La présente invention vise à pallier ces inconvénients de l'état de la technique et à proposer un blocage de fil amélioré en termes principalement de coût et de simplicité, sans sacrifier l'efficacité du blocage.

Un autre objet de la présente invention est de permettre, si cela est souhaité, au mécanisme de blocage de s'adapter à des fils de tailles et de formes très diverses.

L'invention propose à cet effet une tête de coupe pour débrousailleuse, coupe-bordures ou analogue, conforme à la revendication 1.

Certains aspects préférés, mais non limitatifs, de cette tête de coupe sont les suivants :
* ladite force est une force centrifuge engendrée par la rotation de la tête.
* le coulisseau est sollicité par un ressort.
* le ressort agit dans le même sens que la force centrifuge.
* la tête de coupe comprend deux passages pour deux tronçons de fil de coupe.
* le ou chaque passage de fil débouche à l'extérieur de la tête à ses deux extrémités, de manière à recevoir un tronçon de fil de coupe dont.deux longueurs terminales opèrent.
* la tête de coupe comprend un coulisseau commun apte à bloquer les deux tronçons de fil de coupe.
* la tête de coupe comprend deux coulisseaux aptes à bloquer respectivement les deux tronçons de fil.
* les deux coulisseaux sont aptes à se déplacer en sens opposés selon un diamètre de la tête.
* les deux passages de fil sont parallèles entre eux.
* les deux extrémités des deux passages de fil définissent quatre sorties de fil espacées mutuellement d'environ 90° dans la direction périphérique de la tête.
* la section du passage de fil ou de chaque passage de fil est choisie parmi les formes circulaires, oblongues et polygonales.
* la section du passage de fil ou de chaque passage de fil présente une forme de losange aplati.
* la surface de travail du coulisseau appartient à un passage de fil traversant formé dans le coulisseau.
* le passage de fil traversant formé dans le coulisseau présente la même section transversale que le passage de fil correspondant formé dans la tête de coupe.
* le passage de fil traversant formé dans le coulisseau présente une section transversale différente de celle du passage de fil correspondant formé dans la tête de coupe.
* la surface de travail du coulisseau est formée sur une région de travail profilée.
* la surface de travail du coulisseau est orientée en oblique par rapport à la direction de déplacement du coulisseau.
* le ou chaque coulisseau comprend une partie d'actionnement accessible de l'extérieur de la tête et permettant de positionner ledit coulisseau de telle sorte qu'il ne fasse pas obstacle à l'engagement d'un tronçon de fil de coupe dans le passage de fil correspondant formé dans la tête.
* ladite partie d'actionnement est située, en direction radiale, en retrait par rapport à la périphérie de la tête de coupe.

L'invention propose également un appareil de coupe tel que débrousailleuse, coupe-bordures ou analogue conforme à la revendication 21.

D'autres aspects, buts et avantages de la présente invention apparaîtront mieux à la lecture de la description détaillée suivante des formes de réalisation préférée de celle-ci, donnée à titre d'exemple non limitatif et faite en référence aux dessins annexés, sur lesquels :
La figure 1 illustre schématiquement en élévation trois composants participant à un dispositif de blocage de fil d'une tête de coupe de végétaux selon l'invention,
Les figures 2A et 2B illustrent le comportement de ces trois composants dans deux positions différentes,
Les figures 3A et 3B sont des vues analogues aux figures 2A et 2B, avec la présence d'un fil de coupe,
La figure 4 est une vue schématique partiellement en section horizontale et partiellement de dessus d'une tête de coupe comprenant deux dispositifs de blocage de fils tels que décrits ci-dessus,
La figure 5 est une vue schématique en perspective d'un dispositif de blocage pour deux fils de coupe,
Les figures 6A et 6B illustrent le comportement d'un dispositif analogue à celui de la figure 5, dans deux positions différentes,
Les figures 7A et 7B illustrent une variante de réalisation du dispositif des figures 6A et 6B, dans des positions correspondantes,
Les figures 8A, 8B à 11A, 11B sont des vues simplifiés montrant seulement l'organe de blocage, le fil et les contours d'un passage de fil de la tête, dans deux positions différentes, en illustrant un certain nombre de formes de réalisation possibles pour l'organe de blocage,
Les figures 12A et 12B sont des vues partiellement de dessus et partiellement en coupe d'une tête à un seul fil de coupe équipée d'un dispositif de blocage selon l'invention, dans deux positions différentes,
Les figures 13A, 13B et 14A, 14B sont respectivement des vues de dessus schématiques, dans deux positions, de deux formes de réalisation du dispositif de blocage pour une tête à deux fils de coupe,
Les figures 15A et 15B sont des vues en coupe axiale d'une tête de coupe selon une autre forme de réalisation de l'invention,
Les figures 16 et 17 sont des vues en perspective illustrant deux formes de réalisation possibles pour l'organe de blocage de la tête de coupe des figures 15A Et 15B,
Les figures 18A et 18B sont des vues en coupe axiale d'une tête de coupe selon encore une autre forme de réalisation de l'invention, et
La figure 19 est une vue en perspective illustrant l'organe de blocage de la tête de coupe des figures 18A Et 18B.

On notera à titre préliminaire que, d'une figure à l'autre, des éléments ou parties identiques ou similaires ont été désignés dans la mesure du possible par les mêmes signes de référence, et ne seront pas décrits à nouveau à chaque fois afin d'alléger la description.

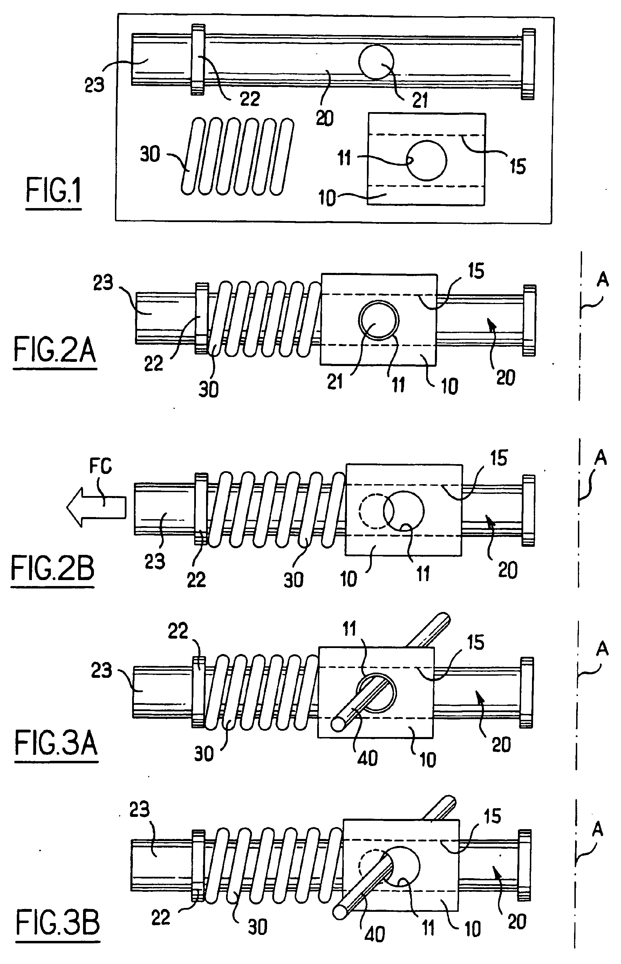

On a représenté sur la figure 1 et les figures 2A, 2B les trois composants d'un dispositif de blocage de fil de coupe selon l'invention, à savoir (i) une masselotte coulissante ou coulisseau 20, (ii) une région de la tête de coupe 10 possédant un passage 11 pour un fil de coupe (non représenté) et un guide 15 pour le coulisseau 20, s'étendant sensiblement à angle droit par rapport au passage 11, et (iii) un ressort optionnel 30, ici un ressort hélicoïdal de compression.

Le coulisseau 20 possède un passage transversal 21 pour le fil de coupe, une collerette 22 pour l'appui d'une extrémité du ressort 30 placé autour du coulisseau, et une partie d'actionnement 23 accessible de l'extérieur de la tête de coupe comme on le verra plus en détail dans la suite.

Dans la présente forme de réalisation, les passages de fil 11, 21 formés respectivement dans la tête et dans le coulisseau présentent une même section transversale circulaire.

Bien que l'ensemble de la tête de coupe n'ait pas été représenté sur les figures 2A et 2B, on a néanmoins représenté son axe de rotation A.

Les figures 3A et 3B correspondent respectivement aux figures 2A et 2B, avec un fil ou filament de coupe 40 engagé dans le dispositif. Le fil de coupe est ici un tronçon de fil de coupe ordinaire, de section circulaire et d'un diamètre sensiblement inférieur à celui des passages 11 et 21.

Dans la position des figures 2A et 3A, une pression a été exercée par l'utilisateur sur la partie d'actionnement 23, vers la droite sur la figure, de manière à sensiblement aligner les passages 11 et 21 tout en comprimant le ressort 30. Dans cette relation d'alignement, le fil 40 a pu être engagé dans les passages 11 et 21, comme illustré en figure 3A, en étant positionné pour qu'une longueur appropriée sorte de la tête de coupe, comme on l'illustrera plus loin.

Une fois que l'effort de l'utilisateur est relâché, l'ensemble adopte spontanément la position de la figure 3B, où le fil de coupe 40 est fermement retenu dans le dispositif grâce à l'effort de cisaillement réalisé entre l'appui du fil 40 au niveau du passage de fil 11 pratiqué dans la tête de coupe, de part et d'autre du coulisseau 20, et à l'appui du fil dans le coulisseau 20 au niveau du passage de fil 21.

Il est important d'observer ici que, de préférence, la rotation de la tête de coupe autour de son axe de rotation A contribue à solliciter davantage le coulisseau 20 dans le sens de l'effort de cisaillement précité, de manière à accentuer encore la retenue du fil de coupe lors de l'utilisation de l'appareil de coupe.

Dans ce cas, le ressort 30 peut être omis, ou peut agir dans une direction différente, l'effort de retenue étant assuré uniquement ou principalement par la seule force centrifuge.

Bien entendu, le poids de la masselotte coulissante 20, et le cas échéant la force exercée par le ressort 30, sont choisis de telle manière que l'effort de cisaillement exercé sur le fil pour le retenir d'aboutisse pas à entailler sévèrement celui-ci ou à le sectionner, et ceci même avec les sections les plus petites du fil de coupe utilisable.

On observe sur les figures 3A et 3B que les passages 11, 21 permettent d'accueillir des fils de coupe de tailles et de formes très diverses, pour autant que leur section transversale soit inscrite dans la section circulaire de ces passages.

On observe également que l'effort exercé sur le fil et permettant son blocage dans la tête de coupe est essentiellement indépendant de la taille du fil.

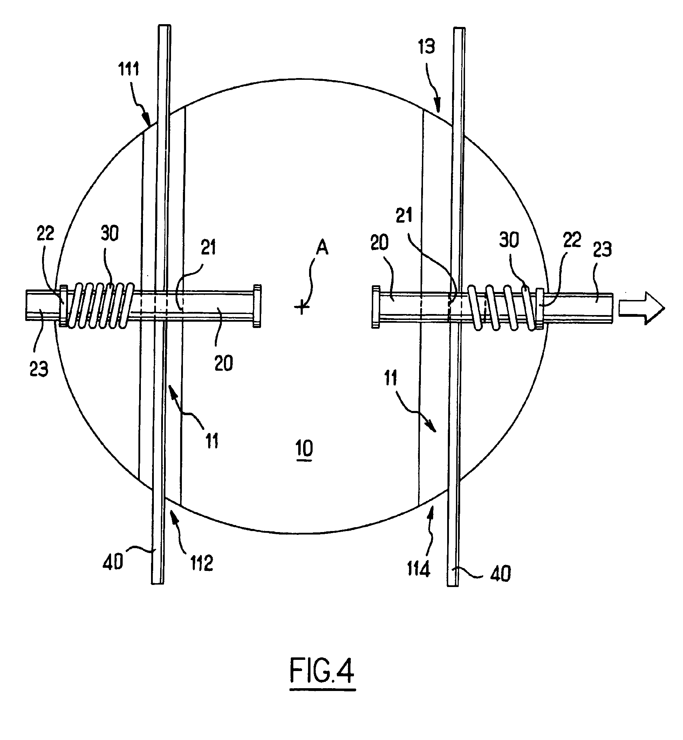

La figure 4 illustre schématiquement une tête de coupe 10 en forme générale de disque, dans laquelle on a ménagé deux passages de fil parallèles 11a, 11b, traversant la tête de part en part, et de préférence séparés l'un de l'autre d'une distance telle que les quatre sorties de fil 111, 112, 113 et 114 soient régulièrement réparties à la périphérie de la tête, avec des écarts angulaires d'environ 90°.

Chaque passage de fil présente une section oblongue, avec le grand axe de cette section situé dans le plan de la tête.

A chaque passage de fil 11 est associé un dispositif de blocage tel que décrit en référence aux figures précédentes. Les deux coulisseaux 20a, 20b s'étendent ici dans l'alignement l'un de l'autre, sur un diamètre de la tête, de manière à pouvoir bloquer le fil de coupe sensiblement au milieu du passage de fil respectif.

Les passages de fil 21a, 21b formés dans les coulisseaux respectifs 20a, 20b sont de préférence d'une section oblongue sensiblement identique à la section des passages 11a 11b.

La partie d'actionnement 23a, 23b de chaque coulisseau peut être utilisée pour pousser celui-ci vers l'intérieur jusqu'à ce que son passage de fil 21a, 21b soit sensiblement aligné avec le passage de fil respectif 11 de la tête, pour permettre la mise en pace d'un tronçon de fil de coupe 40a, 40b respectivement. Ce dernier présente une longueur choisie de telle sorte que, lorsqu'il est centré par rapport au passage 11, deux longueurs de fil sensiblement identiques sortent de la tête au niveau des sorties de fil respectives. Ainsi, un seul dispositif de blocage permet, selon un aspect avantageux de cette forme de réalisation, le blocage simultané de deux longueurs de fil de coupe.

Lorsque la pression sur la partie d'actionnement 23 est relâchée, le ressort 30 sollicite le coulisseau 20 pour bloquer dans une certaine mesure le tronçon de fil de coupe 40 respectif.

Ensuite, lors de l'utilisation de l'appareil, la rotation de la tête de coupe produit sur les coulisseaux 20 une force centrifuge qui assure le maintien ferme des longueurs de fil.

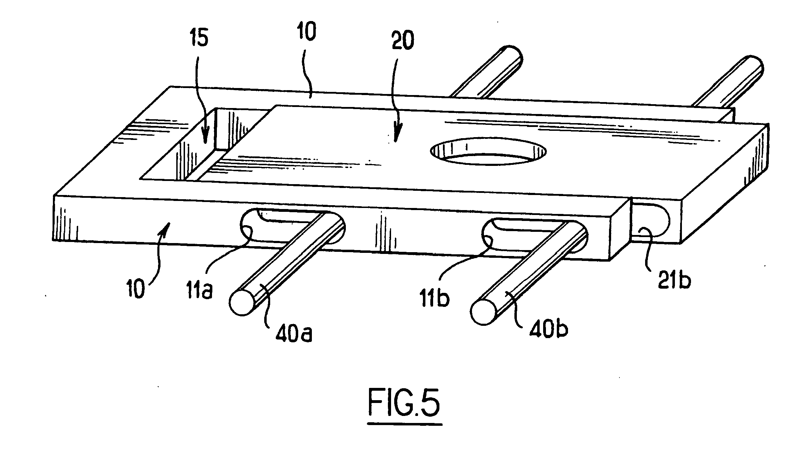

La figure 5 illustre en perspective un dispositif de blocage à passages oblongs selon l'invention, la tête de coupe étant ici matérialisée par seulement deux régions de celle-ci longeant le coulisseau 20 et délimitant le passage 15 dans lequel le coulisseau est guidé. Le coulisseau 20 est ici apte à réaliser simultanément le blocage de deux tronçons de fil de coupe 40a, 40b. À cet effet, la tête de coupe 10 possède deux passages de fil 11a et 11b et le coulisseau 20 possède deux passages de fil homologues 21a, 21b. Le coulisseau 20 est ici en forme de plaque, avec une largeur telle que deux efforts de cisaillement sur chaque tronçon de fil 40a, 40b s'exercent à une distance mutuelle correspondant à la largeur du coulisseau.

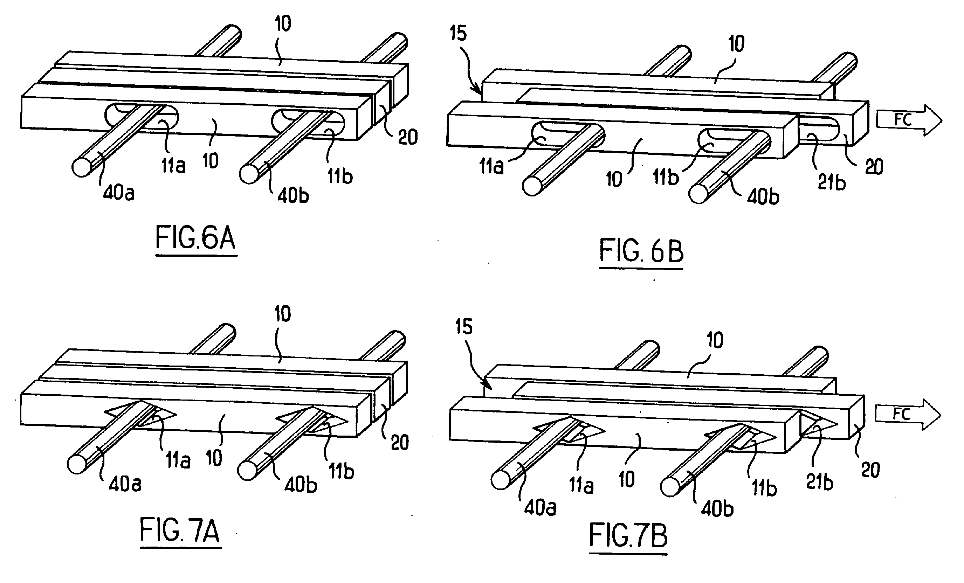

Les figures 6A et 6B illustrent un dispositif de blocage de fil semblable à celui de la figure 5, avec toutefois un coulisseau 20 de largeur sensiblement plus petite. Sur la figure 6A, le coulisseau a été sollicité par l'utilisateur pour aligner les passages de fil de la tête et du coulisseau, pour permettre la mise en place des tronçons de fil 40a, 40b. Sur la figure 6B, le coulisseau 20 est sollicité par la force centrifuge FC et bloque simultanément les deux tronçons de fil.

Les figures 7A et 7B sont des vues semblables aux figures 6A, 6B, la différence résidant dans la forme en losange aplati de la section transversale des passages de fil 11a, 11b de la tête de coupe 10 et de préférence, de façon non visible, également des passages de fil 21a, 21b du coulisseau 20.

Cette forme particulière des passages de fil présente deux avantages. Le premier est qu'en agissant sur deux régions distinctes de la surface du fil lors de l'application de l'effort de cisaillement (correspondant aux deux faces inclinées en contact avec le fil), les risques de sectionnement du fil en cas de force centrifuge importante sont diminués. Le second avantage est que, lorsque le fil de coupe présente une section polygonale, par exemple carrée, et est conçu pour adopter une orientation telle que les végétaux sont attaqués au niveau d'une arête du fil, cette section des passages de fil permet de maintenir le fil dans cette orientation, ou en tout cas y contribue.

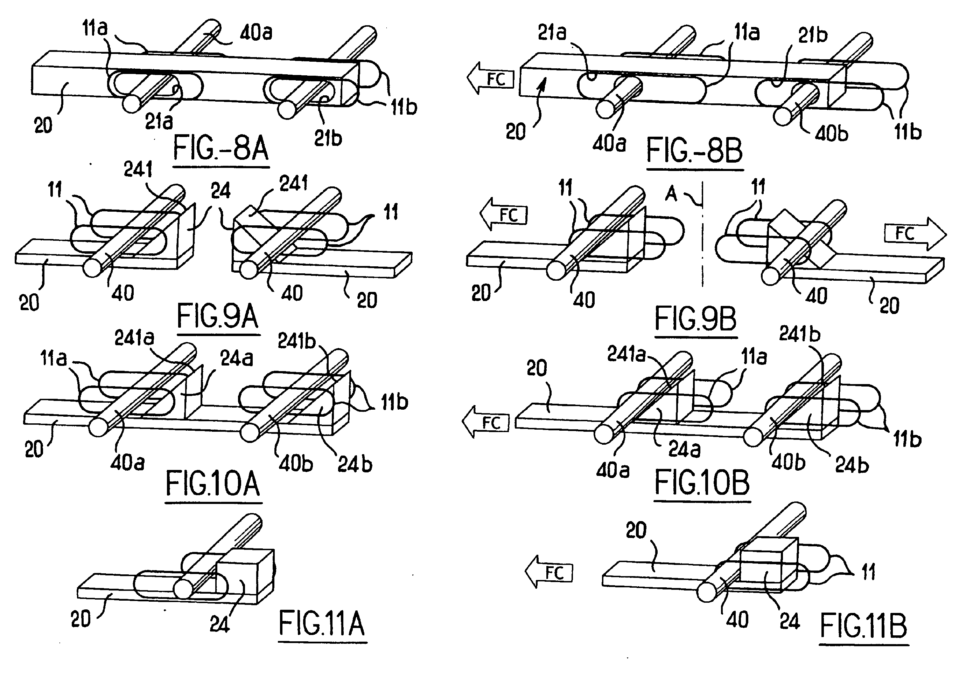

Les figures 8A, 8B à 11A, 11B illustrent différents principes de blocage du fil par effet de cisaillement. Sur ces figures, les passages de fil 11 ou 11a, 11b formés dans la tête de coupe sont illustrés schématiquement par le contour de leur section transversale.

Les figures 8A et 8B illustrent un principe déjà décrit plus haut, avec des passages de fil oblongs.

Les figures 9A et 9B illustrent une forme de réalisation où les passages de fil 11 de la tête de coupe présentent une section transversale oblongue, et où le coulisseau 20 possède une région de travail 24 présentant un pan coupé 241, par exemple à environ 45° par rapport à la direction de déplacement dudit coulisseau, le fil de coupe 40 étant bloqué par effort de cisaillement entre ce pan coupé et l'extrémité de forme semi-cylindrique du passage de fil 11 de la tête de coupe.

La figure 9B illustre la position de l'axe de rotation A de la tête de coupe, et la direction de la force centrifuge FC exercée sur les deux coulisseaux 20, 20 lors de la rotation de la tête autour de cet axe.

Les figures 10A et 10B illustrent un principe identique à celui des figures 9A et 9B, mais utilisé dans un double dispositif de blocage, avec deux passages de fil 11a, 11b dans la tête et deux pans coupés de blocage 241a, 241b sur le coulisseau 20. La force centrifuge FC exercée sur le coulisseau 20 assure le blocage simultané de deux tronçons de fil 40a, 40b.

Les figures 11A et 11B illustrent une autre forme de réalisation, où la région de travail 24 du coulisseau 20 possède une face de travail droite, perpendiculaire à la direction de déplacement du coulisseau.

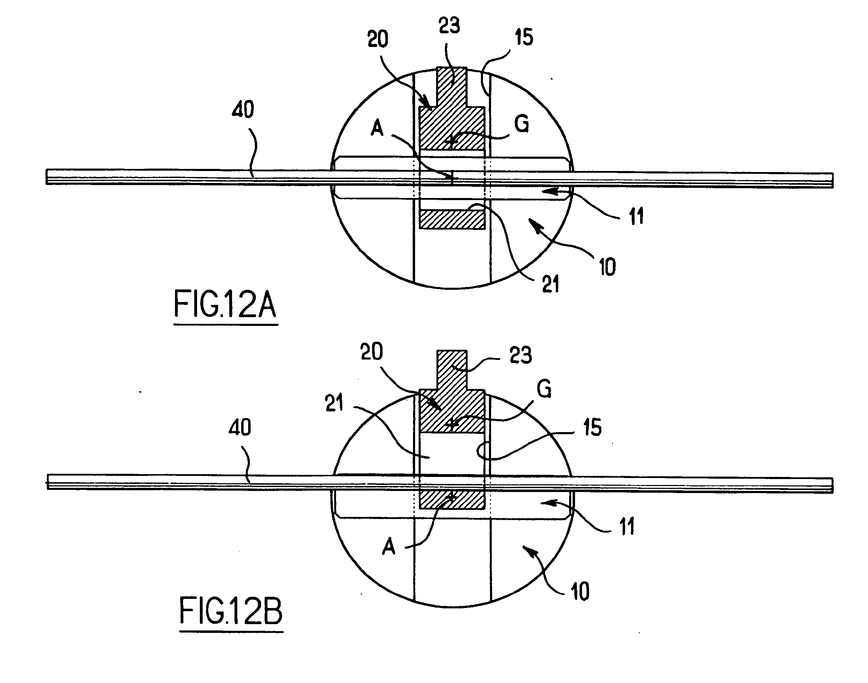

Les figures 12A et 12B représentent schématiquement une tête de coupe 10 pourvue d'un passage de fil 11 disposé selon un diamètre.

Le coulisseau 20 se déplace dans un guide 15 formé également sur un diamètre, perpendiculairement à la direction du passage de fil 11. Ici encore, un dispositif de blocage unique assure le blocage pour deux longueurs de fil sortant respectivement aux deux extrémités du passage 11.

Afin que la rotation de la tête de coupe produise une force centrifuge apte à solliciter le coulisseau 20 pour qu'il bloque effectivement le fil 40, les masses du coulisseau sont réparties pour que son centre de gravité G soit situé de façon décalée par rapport à l'axe de rotation A de la tête.

Ici encore, le coulisseau possède une partie d'actionnement 23 actionnable par l'utilisateur pour aligner le passage de fil 21 du coulisseau avec le passage de fil 11 de la tête 10.

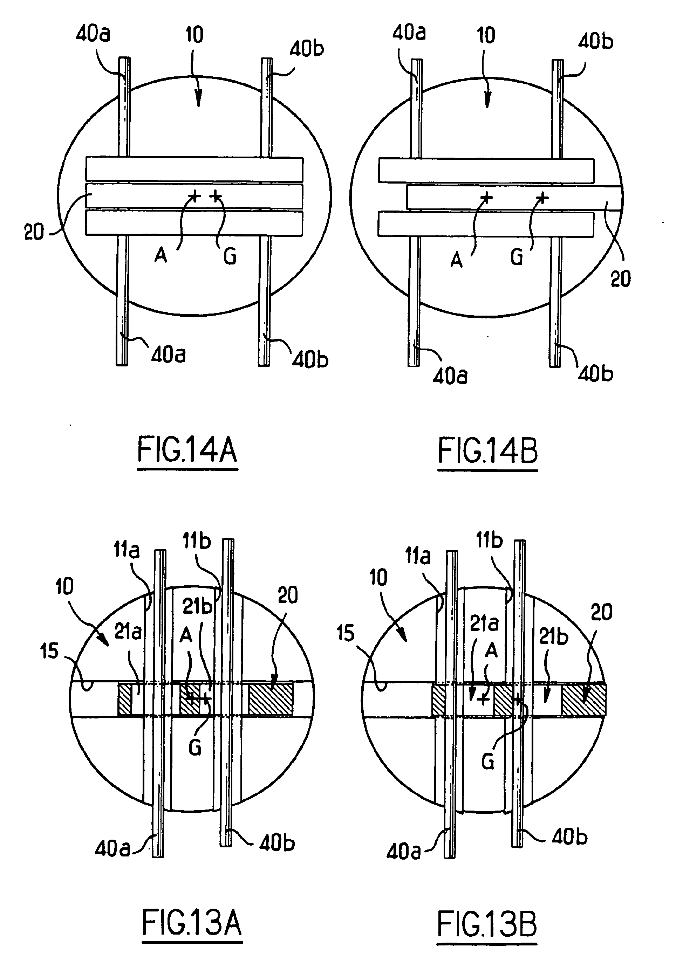

Les figures 13A et 13B illustrent un agencement de tête de coupe 10 avec deux passages de fil 11a, 11b parallèles l'un à l'autre, et un dispositif de blocage de fil commun pour les deux fils 40a, 40b engagés respectivement dans les deux passages. Ici encore, le centre de gravité G de la masselotte formée par le coulisseau 20 est décalé par rapport à l'axe de rotation A de la tête, de manière à ce que la rotation de la tête de coupe induise le déplacement du coulisseau 20 dans le sens d'un blocage des fils de coupe.

Les figures 14A et 14B illustrent un principe similaire à celui des figures 13A et 13b. Sur le plan géométrique, le coulisseau 20 est centré par rapport à l'axe de rotation A de la tête. En revanche, les masses dudit coulisseau sont réparties de telle sorte que son centre de gravité, comme dans le cas précédent, soit décalé par rapport à l'axe de rotation A de la tête.

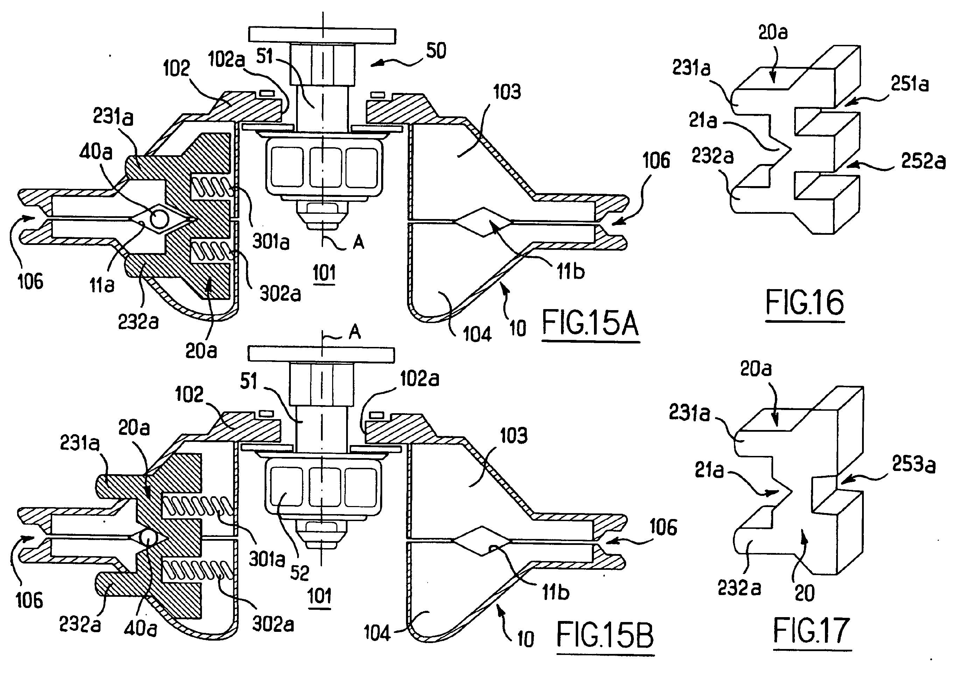

En référence maintenant aux figures 15A et 15B, on a représenté plus en détail la structure d'une tête de coupe réalisée selon l'invention. Elle comprend deux plateaux 103, 104 de contours circulaires assemblés l'un à l'autre par exemple par des vis (de façon non illustrée).

Le plateau 103 comprend une bride supérieure 102 dans laquelle est formé un passage axial 102a pour l'arbre 51 à extrémité filetée de l'appareil de coupe de végétaux. Un écrou 52 vissé sur l'arbre 51 à travers une cavité centrale 101 définie par les plateaux 103, 104 permet de bloquer la tête de coupe sur l'arbre, d'une manière classique en soi.

Deux passages parallèles 11a, 11b pour deux tronçons de fils de coupe sont formés par des renfoncements complémentaires formés dans les faces en vis-à-vis des deux plateaux 103, 104, ces passages ayant ici la forme de losanges à plat.

Les deux plateaux 103, 104 définissent également de façon conjointe une gorge périphérique 106 dans laquelle les longueurs sortantes de fil de coupe peuvent s'appuyer et, si nécessaire, être guidées et maintenues dans leur orientation propre à la coupe.

L'effort de cisaillement apte à causer le blocage des tronçons de fil de coupe est engendré par deux coulisseaux 20a, 20b, dont un seul est visible sur les figures 15A et 15B et représenté plus en détail sur la figure 16.

Il comprend deux cavités 251a, 252a aptes à recevoir respectivement deux ressorts de compression 301a, 302a prenant appui sur une paroi intérieure de la tête, respectivement au niveau des plateaux 103 et 104 et un renfoncement en V 21a apte à solliciter le fil de coupe 40a en s'engageant dans un canal de guidage (non visible) intersectant le passage 11a pour ce fil de coupe.

Le coulisseau 20a comporte par ailleurs deux doigts 231a, 232a faisant saillie hors de la tête de coupe au niveau de pans coniques appartenant aux plateaux respectifs 103, 104, de manière à permettre à l'utilisateur de solliciter le coulisseau 20a pour permettre la mise en place du tronçon de fil de coupe respectif (figure 15A). On notera ici que de cette manière, les doigts d'actionnement se situent, en direction radiale, en retrait par rapport à la périphérie de la tête de coupe, pour ne pas être exposés aux contraintes extrêmement fortes exercées par les végétaux lors du travail de l'appareil.

Dans la position de la figure 15B, le coulisseau 20a a été libéré et, sous l'effet de la force centrifuge et accessoirement des ressorts 301a, 302a, la partie 21a de celui-ci en coopération avec les parois du passage de fil 11a exerce sur le fil une sollicitation en cisaillement pour fermement maintenir celui-ci dans la tête de coupe 10.

Le coulisseau 20b est constitué, disposé et actionné symétriquement du coulisseau 20a par rapport à l'axe de rotation A de la tête.

La figure 17 des dessins illustre une variante de réalisation du coulisseau 20a, où celui-ci est sollicité non plus par deux ressorts mais par un ressort unique disposé dans une cavité 253a formée à mi-hauteur.

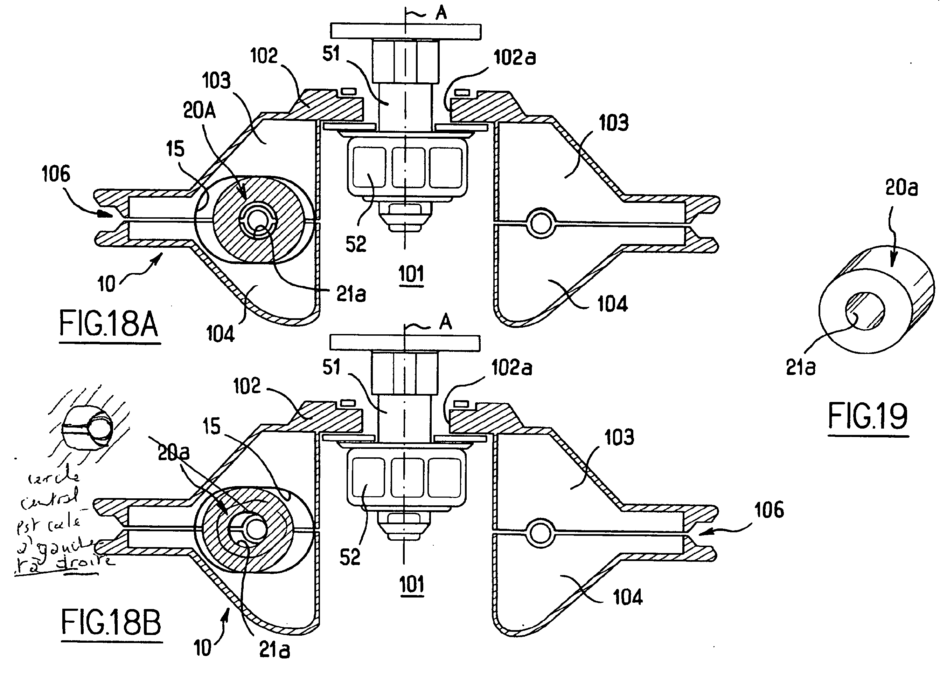

Les figures 18A et 18B illustrent une forme de réalisation qui diffère de celles des figures 15A et 15B principalement par la forme des passages de fil 11a, 11b et des coulisseaux de blocage respectifs 20a, 20b. Ainsi chaque passage de fil 11a, 11b présente une section circulaire, en étant formé par deux renfoncements semi-circulaires formés dans les plateaux 103, 104 de la tête.

Les coulisseaux 20a, 20b (dont seul le coulisseau 20a est représenté) présentent la forme de bagues. Ainsi le coulisseau 20a possède (voir également figure 19) avec un passage central 21a de section circulaire pour le fil de coupe et une surface périphérique cylindrique coaxiale, par laquelle le coulisseau est guidé dans son canal 15 de profil oblong, dont la hauteur est sensiblement égale au diamètre du coulisseau.

Dans la position de la figure 18A, le coulisseau 20a occupe une position dans laquelle le fil de coupe 40a peut être mis en place dans son passage 10a. dans la position de la figure 18B, le coulisseau 20a est sollicité radialement vers l'extérieur sous l'effet de la force centrifuge, pour fermement bloquer le tronçon de fil 40a dans la tête de coupe.

Le coulisseau 20b est formé, positionné et actionné symétriquement du coulisseau 20a par rapport à l'axe de rotation A de la tête de coupe 10.

Bien entendu, la présente invention ne se limite pas aux formes de réalisation décrites et représentées, et l'homme du métier saura y apporter de nombreuses variantes et modifications. En particulier, le dispositif de blocage de fil selon l'invention, bien qu'il ait été décrit dans son application à des brins individuels de fil, peut s'appliquer également au blocage d'un fil dévidé à partir d'une bobine de fil reçue dans la tête.f

## Revendications

1. Tête de coupe (10) pour débrousailleuse, coupe-bordures ou analogue, comprenant un passage (11) pour un fil de coupe (40) et un élément mobile (20) de blocage de fil, l'élément de blocage consistant en un coulisseau (20) qui comprend au moins un passage transversal (21) pour au moins un fil de coupe (40), **caractérisée en ce que** ledit coulisseau (20) se déplaçe linéairement et radialement dans un guide (15) fixe qui intersecte le passage de fil (11), ledit coulisseau (20) étant assujetti à une force, et le coulisseau (20) et le passage de fil (11) au voisinage du guide possédant des surfaces de travail (11, 21) bloquant le fil par effet de cisaillement réalisé entre l'appui du fil (40) au niveau du passage du fil (11) pratiqué dans la tête de coupe, de part et d'autre du coulisseau (20) et à l'appui du fil dans le coulisseau (20) au niveau du passage de fil (21).

2. Tête de coupe selon la revendication 1, **caractérisée en ce que** ladite force est une force centrifuge engendrée par la rotation de la tête.

3. Tête de coupe selon la revendication 1 ou 2, **caractérisée en ce que** le coulisseau (20) est sollicité par un ressort (30).

4. Tête de coupe selon les revendications 2 et 3 prises en combinaison, **caractérisé en ce que** le ressort (30) agit dans le même sens que la force centrifuge.

5. Tête de coupe selon la revendication 4, **caractérisée en ce qu'**elle comprend deux passages (11a, 11b) pour deux tronçons de fil de coupe (40a, 40b).

6. Tête de coupe selon l'une des revendications 1 à 5, **caractérisé en ce que** le ou chaque passage de fil (40) débouche à l'extérieur de la tête (10) à ses deux extrémités, de manière à recevoir un tronçon de fil de coupe (40) dont deux longueurs terminales opèrent.

7. Tête de coupe selon la revendication 5 ou la revendication 6 prise dans la dépendance de la revendication 5, **caractérisée en ce qu'**elle comprend un coulisseau commun (20) apte à bloquer les deux tronçons de fil de coupe (40a, 40b).

8. Tête de coupe selon la revendication 7, **caractérisée en ce qu'**elle comprend deux coulisseaux (20a, 20b) aptes à bloquer respectivement les deux tronçons de fil (40a, 40b).

9. Tête de coupe selon la revendication 8, **caractérisée en ce que** les deux coulisseaux (20a, 20b) sont aptes à se déplacer en sens opposés selon un diamètre de la tête.

10. Tête de coupe selon l'une des revendications 5 à 9, **caractérisée en ce que** les deux passages de fil (11a, 11b) sont parallèles entre eux.

11. Tête de coupe selon la revendication 10, **caractérisée en ce que** les deux extrémités des deux passages de fil (11a, 11b) définissent quatre sorties de fil (111-114) espacées mutuellement d'environ 90° dans la direction périphérique de la tête.

12. Tête de coupe selon l'une des revendications 1 à 11, **caractérisée en ce que** la section du passage de fil ou de chaque passage de fil (11 ; 11a, 11b) est choisie parmi les formes circulaires, oblongues et polygonales.

13. Tête de coupe selon la revendication 12, **caractérisée en ce que** la section du passage de fil ou de chaque passage de fil présente une forme de losange aplati.

14. Tête de coupe selon l'une des revendications 1 à 13, **caractérisée en ce que** la surface de travail du coulisseau (20) appartient à un passage de fil traversant (21) formé dans le coulisseau.

15. Tête de coupe selon la revendication 14, **caractérisée en ce que** le passage de fil traversant (21) formé dans le coulisseau (20) présente la même section transversale que le passage de fil correspondant (11) formé dans la tête de coupe (10).

16. Tête de coupe selon la revendication 14, **caractérisée en ce que** le passage de fil traversant (21) formé dans le coulisseau (20) présente une section transversale différente de celle du passage de fil correspondant (11) formé dans la tête de coupe.

17. Tête de coupe selon l'une des revendications 1 à 13, **caractérisée en ce que** la surface de travail (241) du coulisseau est formée sur une région de travail profilée (24).

18. Tête de coupe selon la revendication 17, **caractérisée en ce que** la surface de travail (241) du coulisseau est orientée en oblique par rapport à la direction de déplacement du coulisseau.

19. Tête de coupe selon l'une des revendications 1 à 18, **caractérisée en ce que** le ou chaque coulisseau (20 ; 20a, 20b) comprend une partie d'actionnement (23 ; 231a, 232a) accessible de l'extérieur de la tête et permettant de positionner ledit coulisseau de telle sorte qu'il ne fasse pas obstacle à l'engagement d'un tronçon de fil de coupe dans le passage de fil correspondant (11) formé dans la tête.

20. Tête de coupe selon la revendication 19, **caractérisée en ce que** ladite partie d'actionnement (231a, 232a) est située, en direction radiale, en retrait par rapport à la périphérie de la tête de coupe.

21. Appareil de coupe tel que débrousailleuse, coupe-bordures ou analogue, **caractérisé en ce qu'**il comprend une tête de coupe (100) selon l'une des revendications 1 à 20 et un moteur apte à entraîner en rotation.

## Claims

1. A cutting head (10) for a brush cutter, trimmer or the like, comprising a passage (11) for a cutting wire (40) and a movable wire blocking member (20), the blocking member consisting of a slider (20), which comprises at least one transverse passage (21) for at least one cutting wire (40), **characterized in that** said slider (20) is moving linearly and radially inside a fixed guide (15) intersecting the wire passage (11), said slider (20) being subjected to a force, and the slider (20) and the wire passage (11) near the guide having working surfaces (11, 21) blocking the wire by a shear effect realized between the bearing point of the wire (40) at the wire passage (11) made in the cutting head, on either side of the slider (20), and the bearing point of the wire in the slider (20) at the wire passage (21).

2. The cutting head according to claim 1, **characterized in that** said force is a centrifugal force generated by the rotation of the head.

3. The cutting head according to claim 1 or 2, **characterized in that** the slider (20) is biased by a spring (30).

4. The cutting head according to claims 2 and 3 taken together, **characterized in that** the spring (30) acts in the same direction as the centrifugal force.

5. The cutting head according to claim 4, **characterized in that** it comprises two passages (11a, 11b) for two cutting wire segments (40a, 40b).

6. The cutting head according to any of claims 1 to 5, **characterized in that** the or each wire passage (40) opens onto the outside of the head (10) at the two ends thereof, so as to receive a cutting wire segment (40), the two terminal lengths of which are operating.

7. The cutting head according to claim 5 or claim 6 when depending on claim 5, **characterized in that** it comprises a common slider (20) adapted for blocking both cutting wire segments (40a, 40b).

8. The cutting head according to claim 7, **characterized in that** it comprises two sliders (20a, 20b) adapted for respectively blocking both wire segments (40a, 40b).

9. The cutting head according to claim 8, **characterized in that** the two sliders (20a, 20b) are adapted for moving in opposite directions according to a diameter of the head.

10. The cutting head according to any of claims 5 to 9, **characterized in that** the two wire passages (11a, 11b) are parallel to each other.

11. The cutting head according to claim 10, **characterized in that** the two ends of the two wire passages (11a, 11b) define four wire outlets (111 to 114) mutually spaced apart by about 90° in the peripheral direction of the head.

12. The cutting head according to any of claims 1 to 11, **characterized in that** the cross-section of the wire passage or of each wire passage (11; 11a, 11b) is chosen from circular, oblong, and polygonal shapes.

13. The cutting head according to claim 12, **characterized in that** the cross-section of the wire passage or of each wire passage has a flattened diamond shape.

14. The cutting head according to any of claims 1 to 13, **characterized in that** the working surface of the slider (20) belongs to a wire through-passage (21) formed in the slider.

15. The cutting head according to claim 14, **characterized in that** the wire through-passage (21) formed in the slider (20) has the same cross-section as the corresponding wire passage (11) formed in the cutting head (10).

16. The cutting head according to claim 14, **characterized in that** the wire through-passage (21) formed in the slider (20) has a cross-section different from that of the corresponding wire passage (11) formed in the cutting head.

17. The cutting head according to any of claims 1 to 13, **characterized in that** the working surface (241) of the slider is formed in a profiled working region (24).

18. The cutting head according to claim 17, **characterized in that** the working surface (241) of the slider is oriented obliquely with respect to the moving direction of the slider.

19. The cutting head according to any of claims 1 to 18, **characterized in that** the or each slider (20; 20a, 20b) comprises an actuation part (23; 231a, 232a) accessible from the outside of the head and allowing for said slider to be positioned so that it does not hinder the engagement of a cutting wire segment into the corresponding wire passage (11) formed in the head.

20. The cutting head according to claim 19, **characterized in that** said actuation part (231a, 232a) is situated, in a radial direction, by being recessed with respect to the periphery of the cutting head.

21. A cutting device, such as a brush cutter, trimmer or the like, **characterized in that** it comprises a cutting head (100) according to any of claims 1 to 20, and a motor adapted for rotational driving.

## Patentansprüche

1. Schneidkopf (10) für Freischneidegeräte, Bordkantenschneidegeräte oder dergleichen, umfassend einen Durchgang (11) für einen Schneiddraht (40) und ein bewegliches Drahtblockierelement (20), wobei das Blockierelement aus einem Gleitstück (20) besteht, das mindestens einen Querdurchgang (21) für mindestens einen Schneiddraht (40) umfasst, **dadurch gekennzeichnet, dass** das Gleitstück (20) sich linear und radial innerhalb einer feststehenden Führung (15) bewegt, die den Drahtdurchgang (11) kreuzt, wobei das Gleitstück (20) einer Kraft ausgesetzt ist, und wobei das Gleitstück (20) und der Drahtdurchgang (11) in der Nähe der Führung Arbeitsflächen (11, 21) besitzen, die den Draht durch einen Schereffekt blockieren, der zwischen der Auflage des Drahts (40) am Drahtdurchgang (11), der in dem Schneidkopf angebracht ist, auf beiden Seiten des Gleitstücks (20) und der Auflage des Drahts in dem Gleitstück (20) am Drahtdurchgang (21) ausgeübt wird.

2. Schneidkopf nach Anspruch 1, **dadurch gekennzeichnet, dass** die Kraft eine Zentrifugalkraft ist, die durch die Drehung des Kopfes erzeugt wird.

3. Schneidkopf nach Anspruch 1 oder 2, **dadurch gekennzeichnet, dass** das Gleitstück (20) von einer Feder (30) beansprucht wird.

4. Schneidkopf nach Anspruch 2 und 3 zusammengenommen, **dadurch gekennzeichnet, dass** die Feder (30) in die gleiche Richtung wirkt wie die Zentrifugalkraft.

5. Schneidkopf nach Anspruch 4, **dadurch gekennzeichnet, dass** er zwei Durchgänge (11a, 11b) für zwei Schneiddrahtabschnitte (40a, 40b) umfasst.

6. Schneidkopf nach einem der Ansprüche 1 bis 5, **dadurch gekennzeichnet, dass** der bzw. jeder Drahtdurchgang (40) zur Außenseite des Kopfes (10) an seinen beiden Enden ausmündet, um einen Schneiddrahtabschnitt (40) aufzunehmen, dessen beide Endlängen funktionieren.

7. Schneidkopf nach Anspruch 5 oder nach Anspruch 6 in Abhängigkeit von Anspruch 5, **dadurch gekennzeichnet, dass** er ein gemeinsames Gleitstück (20) umfasst, das dazu geeignet ist, die beiden Schneiddrahtabschnitte (40a, 40b) zu blockieren.

8. Schneidkopf nach Anspruch 7, **dadurch gekennzeichnet, dass** er zwei Gleitstücke (20a, 20b) umfasst, die dazu geeignet sind, jeweils die beiden Drahtabschnitte (40a, 40b) zu blockieren.

9. Schneidkopf nach Anspruch 8, **dadurch gekennzeichnet, dass** die beiden Gleitstücke (20a, 20b) dazu geeignet sind, sich gemäß einem Durchmesser des Kopfes in entgegengesetzte Richtungen zu bewegen.

10. Schneidkopf nach einem der Ansprüche 5 bis 9, **dadurch gekennzeichnet, dass** die beiden Drahtdurchgänge (11a, 11b) zueinander parallel sind.

11. Schneidkopf nach Anspruch 10, **dadurch gekennzeichnet, dass** die beiden Enden der beiden Drahtdurchgänge (11a, 11b) vier Drahtausgänge (111 bis 114) definieren, die gegenseitig um ungefähr 90° in der Umfangsrichtung des Kopfes voneinander beabstandet sind.

12. Schneidkopf nach einem der Ansprüche 1 bis 11, **dadurch gekennzeichnet, dass** der Querschnitt des Drahtdurchgangs oder jedes Drahtdurchgangs (11; 11a, 11b) aus kreisrunden, länglichen und vieleckigen Formen gewählt wird.

13. Schneidkopf nach Anspruch 12, **dadurch gekennzeichnet, dass** der Querschnitt des Drahtdurchgangs oder jedes Drahtdurchgangs die Form einer abgeflachten Raute aufweist.

14. Schneidkopf nach einem der Ansprüche 1 bis 13, **dadurch gekennzeichnet, dass** die Arbeitsfläche des Gleitstücks (20) zu einem durchgehenden Drahtdurchgang (21) gehört, der in dem Gleitstück gebildet ist.

15. Schneidkopf nach Anspruch 14, **dadurch gekennzeichnet, dass** der durchgehende Drahtdurchgang (21), der in dem Gleitstück (20) gebildet ist, den gleichen Querschnitt hat wie der entsprechende Drahtdurchgang (11), der in dem Schneidkopf (10) gebildet ist.

16. Schneidkopf nach Anspruch 14, **dadurch gekennzeichnet, dass** der durchgehende Drahtdurchgang (21), der in dem Gleitstück (20) gebildet ist, einen anderen Querschnitt aufweist als derjenige des entsprechenden Drahtdurchgangs (11), der in dem Schneidkopf gebildet ist.

17. Schneidkopf nach einem der Ansprüche 1 bis 13, **dadurch gekennzeichnet, dass** die Arbeitsfläche (241) des Gleitstücks auf einem Profilarbeitsbereich (24) gebildet ist.

18. Schneidkopf nach Anspruch 17, **dadurch gekennzeichnet, dass** die Arbeitsfläche (241) des Gleitstücks im Verhältnis zur Bewegungsrichtung des Gleitstücks schräg ausgerichtet ist.

19. Schneidkopf nach einem der Ansprüche 1 bis 18, **dadurch gekennzeichnet, dass** das bzw. jedes Gleitstück (20; 20a, 20b) einen Betätigungsteil (23; 231a, 232a) umfasst, der von außerhalb des Kopfes zugänglich ist und es ermöglicht, das Gleitstück derart anzuordnen, dass es den Eingriff eines Schneiddrahtabschnitts in den entsprechenden Drahtdurchgang (11), der in dem Kopf gebildet ist, nicht behindert.

20. Schneidkopf nach Anspruch 19, **dadurch gekennzeichnet, dass** der Betätigungsteil (231a, 232a) in einer radialen Richtung im Verhältnis zum Umfang des Schneidkopfes eingerückt liegt.

21. Schneidvorrichtung, wie etwa ein Freischneidegerät, ein Bordkantenschneidegerät oder dergleichen, **dadurch gekennzeichnet, dass** es einen Schneidkopf (100) nach einem der Ansprüche 1 bis 20 und einen Motor zum Drehantrieb umfasst.
